(19) Europäisches Patentamt
European Patent Office
Office européen des brevets

(11) **EP 4 358 185 A1**

(12) **EUROPEAN PATENT APPLICATION**

(43) Date of publication:
**24.04.2024 Bulletin 2024/17**

(21) Application number: **23195620.2**

(22) Date of filing: **06.09.2023**

(51) International Patent Classification (IPC):
***H01M 4/485*** *(2010.01)* ***H01M 10/0525*** *(2010.01)*
***H01M 10/0569*** *(2010.01)* ***H01M 4/38*** *(2006.01)*
***H01M 4/583*** *(2010.01)*

(52) Cooperative Patent Classification (CPC):
**H01M 10/0569; H01M 4/386; H01M 4/485; H01M 4/583; H01M 10/0525**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **17.10.2022 KR 20220133211**

(71) Applicant: **Samsung SDI Co., Ltd.**
**Yongin-si, Gyeonggi-do 17084 (KR)**

(72) Inventors:
- **CHOI, Hyunbong**
**17084 Yongin-si (KR)**
- **KIM, Sundae**
**17084 Yongin-si (KR)**
- **PARK, Sangwoo**
**17084 Yongin-si (KR)**
- **KIM, Dahyun**
**17084 Yongin-si (KR)**
- **YANG, Yeji**
**17084 Yongin-si (KR)**
- **PARK, Hongryeol**
**17084 Yongin-si (KR)**
- **KIM, Sanghoon**
**17084 Yongin-si (KR)**

(74) Representative: **Marks & Clerk LLP**
**15 Fetter Lane**
**London EC4A 1BW (GB)**

# (54) RECHARGEABLE LITHIUM BATTERY

(57) Provided is a rechargeable lithium battery including an electrolyte solution including a non-aqueous organic solvent and a lithium salt; a positive electrode including a positive electrode active material; and a negative electrode including a negative electrode active material, wherein the non-aqueous organic solvent includes less than about 5 wt% of ethylene carbonate based on the total weight of the non-aqueous organic solvent , and the positive electrode active material includes a cobalt-free lithium nickel manganese-based oxide.

【FIG. 1】

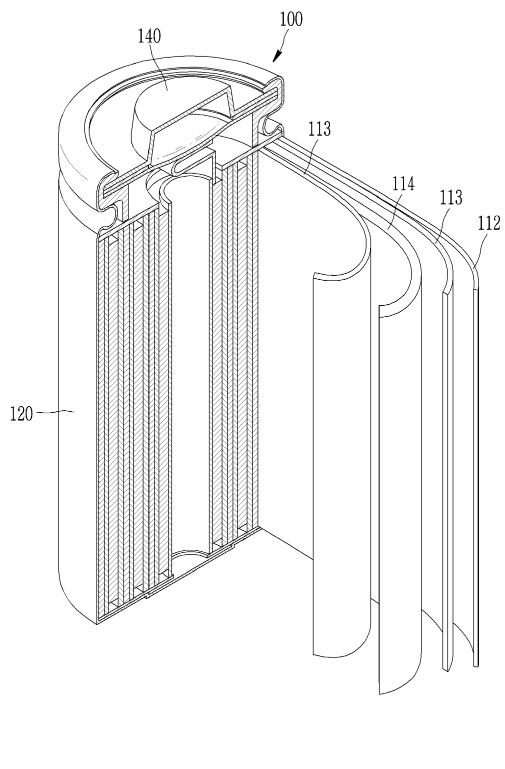


EP 4 358 185 A1

## Description

## BACKGROUND OF THE INVENTION

### (a) Field of the Invention

The present disclosure relates to a rechargeable lithium battery.

### (b) Description of the Related Art

A rechargeable lithium battery may be recharged and has three or more times as high energy density per unit weight as a conventional lead storage battery, nickel-cadmium battery, nickel hydrogen battery, nickel zinc battery and the like. It may be also charged at a high rate and thus, is commercially manufactured for a laptop, a cell phone, an electric tool, an electric bike, and the like, and researches on improvement of additional energy density have been actively made.

In particular, as IT devices increasingly achieve high performance, a highcapacity battery is required, but the high capacity may be realized through expansion of a voltage range, increasing energy density but bringing about a problem of deteriorating performance of a positive electrode due to oxidization of an electrolyte solution in the high voltage range.

In particular, cobalt-free lithium nickel manganese-based oxide is a positive electrode active material including not cobalt but nickel, manganese, and the like as a main component in its composition, and accordingly, a positive electrode including the same may be economical and realize high energy density and thus draws attentions as a next generation positive electrode active material.

However, when the positive electrode including the cobalt-free lithium nickel manganese-based oxide is used in a high-voltage environment, transition metals may be eluted due to structural collapse of the positive electrode, thereby causing a problem such as gas generation inside a cell, capacity reduction, and the like. This elution phenomenon of transition metals tends to be aggravated in a high temperature environment, wherein the eluted transition metals are precipitated on the surface of a negative electrode and may cause a side reaction and thereby increase battery resistance and deteriorate battery cycle-life and output characteristics.

Accordingly, when the positive electrode including the cobalt-free lithium nickel manganese-based oxide is used, an electrolyte solution applicable under high-voltage and high-temperature conditions is required.

## SUMMARY OF THE INVENTION

An embodiment provides a rechargeable lithium battery exhibiting improved high-voltage characteristics and high-temperature characteristics by combining a positive electrode including cobalt-free lithium nickel manganese-based oxide with an electrolyte solution capable of effectively protecting the positive electrode including cobalt-free lithium nickel manganese-based oxide to reduce elution of transition metals under high-voltage and high-temperature conditions and thus to suppress structural collapse of the positive electrode.

An embodiment provides a rechargeable lithium battery including an electrolyte solution including a non-aqueous organic solvent and a lithium salt; a positive electrode including a positive electrode active material; and a negative electrode including a negative electrode active material,

wherein the non-aqueous organic solvent includes less than about 5 wt% of ethylene carbonate based on the total weight of the non-aqueous organic solvent, and
the positive electrode active material includes a cobalt-free lithium nickel manganese-based oxide.

The non-aqueous organic solvent may be composed of chain carbonate alone.

The chain carbonate may be represented by Chemical Formula 1.

[Chemical Formula 1]

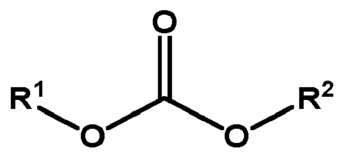

In Chemical Formula 1
$R^1$ and $R^2$ are each independently a substituted or unsubstituted C1 to C20 alkyl group.

The non-aqueous organic solvent may be a mixture of two or more solvents selected from dimethyl carbonate (DMC), diethyl carbonate (DEC), dipropyl carbonate (DPC), methylpropyl carbonate (MPC), ethylpropyl carbonate (EPC), and ethylmethyl carbonate (EMC).

The non-aqueous organic solvent may include ethylmethyl carbonate (EMC) and dimethyl carbonate (DMC) in a volume ratio of about 10:90 to about 50:50.

The electrolyte solution may further include one or more additives selected from vinylene carbonate (VC), fluoroethylene carbonate (FEC), difluoroethylene carbonate, chloroethylene carbonate, dichloroethylene carbonate, bromoethylene carbonate, dibromoethylene carbonate, nitroethylene carbonate, cyanoethylene carbonate, vinylethylene carbonate (VEC), adiponitrile (AN), succinonitrile (SN), 1,3,6-hexane tricyanide (HTCN), propensultone (PST), propanesultone (PS), lithium tetrafluoroborate ($LiBF_4$), lithium difluorophosphate ($LiPO_2F_2$), and 2-fluorobiphenyl (2-FBP).

The cobalt-free lithium nickel manganese-based oxide may include a lithium composite oxide represented by Chemical Formula 3.

[Chemical Formula 3] $Li_aNi_xMn_yM^1_zM^2_wO_{2\pm b}X_c$

In Chemical Formula 3,

$$0.5 \leq a < 1.8, 0 \leq b \leq 0.1, 0 \leq c \leq 0.1, 0 \leq w < 0.1, 0.6 \leq x < 1.0,$$

$$0 < y < 0.4, 0 < z < 0.1, w + x + y + z = 1,$$

$M^1$ and $M^2$ are each independently one or more element selected from Al, Mg, Ti, Zr, Cr, Sr, V, B, W, Mo, Si, Ba, Ca, Ce, Fe, and Nb, and X is one or more element selected from S, F, P, and Cl.

The lithium composite oxide represented by Chemical Formula 3 may be represented by Chemical Formula 3-1.

[Chemical Formula 3-1] $Li_aNi_{x1}Mn_{y1}Al_{z1}M^2_{w1}O_{2\pm b}X_c$

In Chemical Formula 3-1,

$$0.5 \leq a < 1.8, 0 \leq b \leq 0.1, 0 \leq c \leq 0.1, 0 \leq w1 < 0.1, 0.6 \leq x1 <$$

$$1.0, 0 < y1 < 0.4, 0 < z1 < 0.1, w1 + x1 + y1 + z1 = 1,$$

$M^2$ is one or more element selected from Mg, Ti, Zr, Cr, Sr, V, B, W, Mo, Si, Ba, Ca, Ce, Fe, and Nb, and X is one or more element selected from S, F, P, and Cl.

In Chemical Formula 3-1, x1 may be $0.6 \leq x1 \leq 0.79$, y1 may be $0.2 \leq y1 \leq 0.39$, and z1 may be $0.01 \leq z1 \leq 0.1$.

The negative electrode active material may include graphite, a Si composite or a mixture thereof.

The rechargeable lithium battery may have a charging upper limit voltage of greater than or equal to about 4.35 V.

At least some of the above and other features of the invention are set out in the claims.

An embodiment may realize a rechargeable lithium battery exhibiting improved battery stability and cycle-life characteristics by combining a positive electrode including cobalt-free lithium nickel manganese-based oxide with an electrolyte solution capable of effectively protecting the positive electrode to secure phase transition safety of the positive electrode in a high-temperature high-voltage environment and to suppress decomposition of the electrolyte solution and a side reaction with electrodes and thus reduce gas generation and simultaneously, suppress an increase in battery internal resistance.

## BRIEF DESCRIPTION OF THE DRAWINGS

FIG. 1 is a schematic view illustrating a rechargeable lithium battery according to an embodiment of the present invention.

## DETAILED DESCRIPTION OF THE EMBODIMENTS

Hereinafter, a rechargeable lithium battery according to an embodiment of the present disclosure will be described in detail with reference to the accompanying drawings. However, the present invention is not limited to these embodiments and the present invention is defined by the scope of claims.

In the present specification, unless otherwise defined, "substituted" refers to replacement of at least one hydrogen in a substituent or compound by deuterium, a halogen group, a hydroxyl group, an amino group, a substituted or unsubstituted C1 to C30 amine group, a nitro group, a substituted or unsubstituted C1 to C40 silyl group, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, a C1 to C20 alkoxy group, a C1 to C10 fluoroalkyl group, a cyano group, or a combination thereof.

In one example of the present invention, "substituted" refers to replacement of at least one hydrogen of a substituent or a compound by deuterium, a halogen, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, a C1 to C10 fluoroalkyl group, or a cyano group. In addition, in specific examples of the present invention, "substituted" refers to replacement of at least one hydrogen of a substituent or a compound by deuterium, a halogen, a C1 to C20 alkyl group, a C6 to C30 aryl group, a C1 to C10 fluoroalkyl group, or a cyano group. In addition, in specific examples of the present invention, "substituted" refers to replacement of at least one hydrogen of a substituent or a compound by deuterium, a halogen, a C1 to C5 alkyl group, a C6 to C18 aryl group, a C1 to C5 fluoroalkyl group, or a cyano group. In addition, in specific examples of the present invention, "substituted" refers to replacement of at least one hydrogen of a substituent or a compound by deuterium, a cyano group, a halogen, a methyl group, an ethyl group, a propyl group, a butyl group, a phenyl group, a biphenyl group, a terphenyl group, a trifluoromethyl group, or a naphthyl group.

A rechargeable lithium battery may be classified as lithium ion batteries, lithium ion polymer batteries, and lithium polymer batteries according to the presence of a separator and the type of electrolyte solution used therein. Rechargeable lithium batteries may have a variety of shapes and sizes, and include cylindrical, prismatic, coin, or pouch-type batteries, and may be thin film batteries or may be rather bulky in size. Structures and manufacturing methods for rechargeable lithium batteries pertaining to this disclosure are well known in the art.

Herein, a cylindrical rechargeable lithium battery will be described as an example of the rechargeable lithium battery. FIG. 1 schematically shows the structure of a rechargeable lithium battery according to an embodiment. Referring to FIG. 1, a rechargeable lithium battery 100 according to an embodiment includes a battery cell including a positive electrode 114, a negative electrode 112 facing the positive electrode 114, a separator 113 between the positive electrode 114 and the negative electrode 112, and an electrolyte solution (not shown) impregnating the positive electrode 114, the negative electrode 112, and the separator 113, a battery case 120 housing the battery cell, and a sealing member 140 sealing the battery case 120.

Hereinafter, a more detailed configuration of the rechargeable lithium battery 100 according to an embodiment will be described.

A rechargeable lithium battery according to an embodiment includes an electrolyte solution, a positive electrode, and a negative electrode.

The electrolyte solution includes a non-aqueous organic solvent and a lithium salt, and the non-aqueous organic solvent includes less than about 5 wt% of ethylene carbonate based on the total weight of the non-aqueous organic solvent.

The positive electrode includes a positive electrode active material including cobalt-free lithium nickel manganese-based oxide.

In the case of a positive electrode active material including cobalt-free lithium nickel manganese-based oxide, structural instability is strong under a high-voltage condition, so that solvent decomposition and elution of transition metals, particularly Ni, may occur.

This elution phenomenon of the transition metals may generate deterioration of performance of a positive electrode and short-circuits, resulting in deteriorating cycle-life characteristics of a battery and sharply increasing resistance.

However, when the aforementioned electrolyte solution in which the non-aqueous organic solvent and the lithium salt are combined is used together, it is possible to alleviate a decrease in cycle-life characteristics and an abrupt increase in resistance of a battery.

In particular, the positive electrode including the cobalt-free lithium nickel manganese-based oxide may be used in an electrolyte solution including less than about 5 wt% of ethylene carbonate to effectively reduce elution of transition metals under the high voltage and high temperature conditions and thereby, to suppress collapse of the positive electrode structure, improving high-voltage characteristics and high-temperature characteristics of the battery.

The non-aqueous organic solvent serves as a medium for transmitting ions taking part in the electrochemical reaction of a battery.

The non-aqueous organic solvent may be a carbonate-based, ester-based, ether-based, ketone-based, alcohol-based, or aprotic solvent.

The carbonate-based solvent may include dimethyl carbonate (DMC), diethyl carbonate (DEC), dipropyl carbonate (DPC), methylpropyl carbonate (MPC), ethylpropyl carbonate (EPC), ethylmethyl carbonate (EMC), ethylene carbonate (EC), propylene carbonate (PC), butylene carbonate (BC), and the like. The ester-based solvent may include methyl acetate, ethyl acetate, n-propyl acetate, t-butyl acetate, methyl propionate, ethyl propionate, propyl propionate, decanolide, mevalonolactone, caprolactone, and the like. The ether-based solvent may include dibutyl ether, tetraglyme, diglyme, dimethoxyethane, 2-methyltetrahydrofuran, tetrahydrofuran, and the like. In addition, the ketone-based solvent may include cyclohexanone, and the like. The alcohol-based solvent may include ethanol, isopropyl alcohol, and the like, and the aprotic solvent may include nitriles such as R-CN (wherein R is a hydrocarbon group having a C2 to C20 linear, branched, or cyclic structure and may include a double bond, an aromatic ring, or an ether bond), and the like, amides such as dimethyl formamide, and the like, dioxolanes such as 1,3-dioxolane, and the like, sulfolanes, and the like.

The non-aqueous organic solvent may be used alone or in a mixture of two or more. When the non-aqueous organic solvent is used in a mixture, the mixing ratio may be controlled in accordance with a desirable battery performance, which is widely understood by those skilled in the art.

The non-aqueous organic solvent includes less than about 5 wt% of ethylene carbonate based on the total weight of the non-aqueous organic solvent.

When the content of ethylene carbonate is greater than or equal to about 5 wt%, since activity of Ni is increased when driven at a high voltage, as the oxidation number of Ni more strongly tends to be reduced from quadrivalent to divalent, the ethylene carbonate with low oxidation stability is oxidatively decomposed, resulting in eluting Ni and precipitating it on the negative electrode.

As a specific example, the non-aqueous organic solvent may be composed of only chain carbonate. In this case, excellent storage characteristics at a high temperature may be realized as a resistance increase rate is significantly reduced during high-temperature storage.

In the present disclosure, the expression "composed of the chain carbonate" means that it is not mixed with the cyclic carbonate and the like and includes a non-aqueous organic solvent belonging to the category of the chain carbonate alone or in combination.

In an embodiment, the chain carbonate may be represented by Chemical Formula 1.

[Chemical Formula 1]

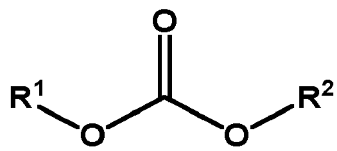

In Chemical Formula 1
$R^1$ and $R^2$ are each independently a substituted or unsubstituted C1 to C20 alkyl group.

For example, $R^1$ and $R^2$ in Chemical Formula 1 may each independently be a substituted or unsubstituted C1 to C10 alkyl group, and for example, $R^1$ and $R^2$ may each independently be a substituted or unsubstituted C1 to C5 alkyl group.

In an embodiment, $R^1$ and $R^2$ in Chemical Formula 1 may each independently be a substituted or unsubstituted methyl group, a substituted or unsubstituted ethyl group, a substituted or unsubstituted n-propyl group, a substituted or unsubstituted n-butyl group, a substituted or unsubstituted n-pentyl group, a substituted or unsubstituted iso-butyl group, or a substituted or unsubstituted neo-pentyl group.

For example, the non-aqueous organic solvent according to a specific embodiment may be a mixture of two or more solvents selected from dimethyl carbonate (DMC), diethyl carbonate (DEC), dipropyl carbonate (DPC), methylpropyl carbonate (MPC), ethylpropyl carbonate (EPC), and ethylmethyl carbonate (EMC).

The non-aqueous organic solvent according to the more specific embodiment may be a mixed solvent of dimethyl carbonate (DMC) and ethylmethyl carbonate (EMC).

The non-aqueous organic solvent may include ethylmethyl carbonate (EMC) and dimethyl carbonate (DMC) in a volume ratio of about 10:90 to about 50:50.

It may be more advantageous in terms of improving battery characteristics that the non-aqueous organic solvent includes dimethyl carbonate (DMC) in an amount of greater than about 50 volume% based on the volume of the non-aqueous organic solvent.

For example, the non-aqueous organic solvent may include ethylmethyl carbonate (EMC) and dimethyl carbonate (DMC) in a volume ratio of about 10:90 to about 40:60, or about 10:90 to about 30:70.

The non-aqueous organic solvent may further include an aromatic hydrocarbon-based organic solvent in addition to the carbonate-based solvent. In this case, the carbonate-based solvent and the aromatic hydrocarbon-based solvent may be mixed in a volume ratio of about 1:1 to about 30:1.

The aromatic hydrocarbon-based organic solvent may be an aromatic hydrocarbon-based compound represented by Chemical Formula 2.

[Chemical Formula 2]

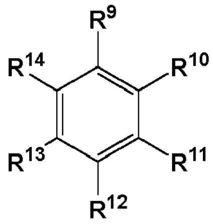

In Chemical Formula 2, $R^9$ to $R^{14}$ are the same or different and are hydrogen, a halogen, a C1 to C10 alkyl group, a C1 to C10 haloalkyl group, or a combination thereof.

Specific examples of the aromatic hydrocarbon-based organic solvent may be benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, or a combination thereof.

The lithium salt dissolved in the non-aqueous organic solvent supplies lithium ions in a battery, enables a basic operation of a rechargeable lithium battery, and improves transportation of the lithium ions between positive and negative electrodes. Examples of the lithium salt may include one or more supporting salt selected from $LiPF_6$, $LiBF_4$, lithium difluoro(oxalate)borate (LiDFOB), $LiPO_2F_2$, $LiSbF_6$, $LiAsF_6$, $LiN(SO_2C_2F_5)_2$, $Li(CF_3SO_2)_2N$, $LiN(SO_3C_2F_5)_2$, $Li(FSO_2)_2N$ (lithium bis(fluorosulfonyl)imide, LiFSI), $LiC_4F_9SO_3$, $LiClO_4$, $LiAlO_2$, $LiAlCl_4$, $LiN(C_xF_{2x+1}SO_2)(C_yF_{2y+1}SO_2)$, wherein, x and y are integers, for example, x is an integer ranging from 1 to 20, y is an integer ranging from 0 to 20, LiCl, LiI, and $LiB(C_2O_4)_2$ (lithium bis(oxalato) borate, LiBOB).

The lithium salt may be used in a concentration ranging from about 0.1 M to about 2.0 M. When the lithium salt is included at the above concentration range, an electrolyte may have excellent performance and lithium ion mobility due to optimal electrolyte conductivity and viscosity.

On the other hand, the electrolyte solution may further include one or more additives selected from vinylene carbonate (VC), fluoroethylene carbonate (FEC), difluoroethylene carbonate, chloroethylene carbonate, dichloroethylene carbonate, bromoethylene carbonate, dibromoethylene carbonate, nitroethylene carbonate, cyanoethylene carbonate, vinylethylene carbonate (VEC), adiponitrile (AN), succinonitrile (SN), 1,3,6-hexane tricyanide (HTCN), propene sultone (PST), propane sultone (PS), lithium tetrafluoroborate ($LiBF_4$), lithium difluorophosphate ($LiPO_2F_2$), and 2-fluoro biphenyl (2-FBP).

By further including the above additives, cycle-life may be further improved or gas generated from the positive electrode and negative electrode during high-temperature storage may be effectively controlled.

The additive may be included in an amount of about 0.2 to about 20 parts by weight, specifically about 0.2 to about 15 parts by weight, for example, about 0.2 to about 10 parts by weight, based on 100 parts by weight of the electrolyte solution for a rechargeable lithium battery.

When the content of the additive is as described above the increase in film resistance may be minimized, thereby contributing to the improvement of battery performance.

The positive electrode includes a positive electrode current collector and a positive electrode active material layer formed on the positive electrode current collector, and the positive electrode active material layer includes a positive electrode active material.

The positive electrode active material includes a cobalt-free lithium nickel manganese-based oxide.

In the present disclosure, the cobalt-free lithium nickel manganese-based oxide as a positive electrode active material means a positive electrode active material composed mainly of nickel, manganese, etc. without including cobalt

in the composition of the positive electrode active material.

For example, the cobalt-free lithium nickel manganese-based oxide may include one or more lithium composite oxides represented by Chemical Formula 3.

[Chemical Formula 3] $Li_aNi_xMn_yM^1{}_zM^2{}_wO_{2\pm b}X_c$

In Chemical Formula 3,

$$0.5 \leq a < 1.8, 0 \leq b \leq 0.1, 0 \leq c \leq 0.1, 0 \leq w < 0.1, 0.6 \leq x < 1.0,$$

$$0 < y < 0.4, 0 < z < 0.1, w + x + y + z = 1,$$

$M^1$ and $M^2$ are each independently one or more element selected from Al, Mg, Ti, Zr, Cr, Sr, V, B, W, Mo, Si, Ba, Ca, Ce, Fe, and Nb, and X is one or more element selected from S, F, P, and Cl.

The lithium composite oxide may have a coating layer on the surface, or the lithium composite oxide may be mixed with another compound having a coating layer. The coating layer may include one or more coating element compound selected from an oxide of a coating element, a hydroxide of a coating element, an oxyhydroxide of a coating element, an oxycarbonate of a coating element, and a hydroxycarbonate of a coating element. The compound for the coating layer may be amorphous or crystalline. The coating element included in the coating layer may include Mg, Al, K, Na, Ca, Si, Ti, V, Sn, Ge, Ga, B, As, Zr, or a mixture thereof. The coating process may include any conventional processes as long as it does not cause any side effects on the properties of the positive electrode active material (e.g., inkjet coating, dipping), which is well known to persons having ordinary skill in this art, so that the detailed description thereof is omitted.

For example, the lithium composite oxides represented by Chemical Formula 3 may be represented by Chemical Formula 3-1.

[Chemical Formula 3-1] $Li_aNi_{x1}Mn_{y1}Al_{z1}M^2{}_{w1}O_{2\pm b}X_c$

In Chemical Formula 3-1,

$$0.5 \leq a < 1.8, 0 \leq b \leq 0.1, 0 \leq c \leq 0.1, 0 \leq w1 < 0.1, 0.6 \leq x1 <$$

$$1.0, 0 < y1 < 0.4, 0 < z1 < 0.1, w1 + x1 + y1 + z1 = 1,$$

$M^2$ is one or more element selected from Mg, Ti, Zr, Cr, Sr, V, B, W, Mo, Si, Ba, Ca, Ce, Fe, and Nb, and X is one or more element selected from S, F, P, and Cl.

In an embodiment, in Chemical Formula 3-1, $0.6 \leq x1 \leq 0.9$, $0.1 \leq y1 < 0.4$, and $0 < z1 < 0.1$, or $0.6 \leq x1 \leq 0.8$, $0.2 \leq y1 < 0.4$, and $0 < z1 < 0.1$.

For example, in Chemical Formula 3-1, x1 may be $0.6 \leq x1 \leq 0.79$, y1 may be $0.2 \leq y1 \leq 0.39$, and z1 may $0.01 \leq z1 < 0.1$.

The content of the positive electrode active material may be about 90 wt% to about 98 wt% based on the total weight of the positive electrode active material layer.

In an embodiment, the positive electrode active material layer may include a binder. The content of the binder may be about 1 wt% to about 5 wt% based on the total weight of the positive electrode active material layer.

The binder improves binding properties of positive electrode active material particles with one another and with a current collector. Examples thereof may be polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but are not limited thereto.

The positive electrode current collector may include Al foil, but is not limited thereto.

The negative electrode includes a negative electrode current collector and a negative electrode active material layer including a negative electrode active material formed on the negative electrode current collector.

The negative electrode active material may include a material that reversibly intercalates/deintercalates lithium ions, a lithium metal, a lithium metal alloy, a material capable of doping/dedoping lithium, or transition metal oxide.

The material that reversibly intercalates/deintercalates lithium ions includes carbon materials. The carbon material may be any generally-used carbon-based negative electrode active material in a rechargeable lithium battery. Examples of the carbon material include crystalline carbon, amorphous carbon, and a combination thereof. The crystalline carbon may be non-shaped, or sheet, flake, spherical, or fiber shaped natural graphite or artificial graphite and the amorphous carbon may be a soft carbon, a hard carbon, a mesophase pitch carbonization product, calcined coke, and the like.

The lithium metal alloy may include lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be Si, Si-C composite, $SiO_x$(0 < x < 2), a Si-Q alloy wherein Q is an element selected from an alkali metal, an alkaline-earth metal, a Group 13 element, a Group 14 element except Si, a Group 15 element, a Group 16 element, a transition metal, a rare earth element, and a combination thereof), Sn, $SnO_2$, a Sn-$R^A$ alloy (wherein $R^A$ is an element selected from an alkali metal, an alkaline-earth metal, a Group 13 element, a Group 14 element except Sn, a Group 15 element, a Group 16 element, a transition metal, a rare earth element, and a combination thereof), and the like. One or more of these materials may be mixed with $SiO_2$.

The elements Q and $R^A$ may be selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof.

The transition metal oxide may be a vanadium oxide, a lithium vanadium oxide, and the like.

In a more specific embodiment, the negative electrode active material may include graphite, a Si composite or a mixture thereof.

The Si composite may include a core including Si-based particles and an amorphous carbon coating layer. For example, the Si-based particles may include one or more selected from silicon particles, a Si-C composite, $SiO_x$(0 < x ≤ 2), and a Si alloy.

For example, voids may be included in the central portion of the core including the Si-based particles, a radius of the central portion may correspond to about 30% to about 50% of the radius of the Si composite, an average particle diameter of the Si composite may be about 5 μm to about 20 μm, and an average particle diameter of the Si-based particles may be about 10 nm to about 200 nm.

In the present specification, an average particle diameter (D50) may be a particle size at a volume ratio of 50% in a cumulative size-distribution curve.

When the average particle diameter of the Si-based particles is within the above ranges, volume expansion occurring during charging and discharging may be suppressed, and interruption of a conductive path due to particle crushing during charging and discharging may be prevented.

The core including the Si-based particles may further include amorphous carbon, and at this time, the central portion may not include amorphous carbon, and the amorphous carbon may exist only in the surface portion of the Si composite.

Herein, the surface portion means a region from the outermost surface of the central portion to the outermost surface of the Si composite.

In addition, the Si-based particles may be substantially uniformly included throughout the Si composite, that is, may be present in a substantially uniform concentration in the central portion and surface portion.

The amorphous carbon may be soft carbon, hard carbon, a mesophase pitch carbonized product, calcined coke, or a combination thereof.

For example, the Si-C composite may include silicon particles and crystalline carbon.

The silicon particles may be included in an amount of about 1 wt% to about 60 wt%, for example, about 3 wt% to about 60 wt%, based on the total weight of the Si-C composite.

The crystalline carbon may be, for example, graphite, and specifically, natural graphite, artificial graphite, or a combination thereof.

An average particle diameter of the crystalline carbon may be about 5 μm to about 30 μm.

When the negative electrode active material includes the graphite and Si composite together, the graphite and Si composite may be included in the form of a mixture, and the graphite and Si composite may be included in a weight ratio of about 99 : 1 to about 50 : 50.

More specifically, the graphite and Si composite may be included in a weight ratio of about 97 : 3 to about 80 : 20, or about 95 : 5 to about 80 : 20.

The amorphous carbon precursor may be coal-based pitch, mesophase pitch, petroleum-based pitch, coal-based oil, petroleum-based heavy oil, or a polymer resin such as a phenol resin, a furan resin, or a polyimide resin.

In the negative electrode active material layer, the negative electrode active material may be included in an amount of about 95 wt% to about 99 wt% based on the total weight of the negative electrode active material layer.

In an embodiment, the negative electrode active material layer may include a binder, and optionally a conductive material. The content of the binder in the negative electrode active material layer may be about 1 wt% to about 5 wt%

based on the total weight of the negative electrode active material layer. In the negative electrode active material layer, the amount of the conductive material may be about 1 wt% to about 5 wt% based on the total weight of the negative electrode active material layer.

The binder improves binding properties of negative electrode active material particles with one another and with a negative electrode current collector. The binder may be a non-water-soluble binder, a water-soluble binder, or a combination thereof.

The non-water-soluble binder may be polyvinylchloride, carboxylated polyvinylchloride, polyvinylfluoride, polyurethane, polytetrafluoroethylene, polyvinylidene fluoride, polyethylene, polypropylene, polyamideimide, polyimide, or a combination thereof.

The water-soluble binder may be a rubber-based binder or a polymer resin binder. The rubber-based binder may be selected from a styrene-butadiene rubber, an acrylated styrene-butadiene rubber (SBR), an acrylonitrilebutadiene rubber, an acrylic rubber, a butyl rubber, a fluorine rubber, and a combination thereof. The polymer resin binder may be selected from polytetrafluoroethylene, ethylenepropylene copolymer, polyethylene oxide, polyvinylpyrrolidone, polyepichlorohydrin, polyphosphazene, polyacrylonitrile, polystyrene, an ethylene propylene diene copolymer, polyvinylpyridine, chlorosulfonated polyethylene, latex, a polyester resin, an acrylic resin, a phenolic resin, an epoxy resin, polyvinyl alcohol, or a combination thereof.

When the water-soluble binder is used as a negative electrode binder, a cellulose-based compound may be further used to provide viscosity as a thickener. The cellulose-based compound includes one or more of carboxymethyl cellulose, hydroxypropylmethyl cellulose, methyl cellulose, or alkali metal salts thereof. The alkali metals may be Na, K, or Li. Such a thickener may be included in an amount of about 0.1 to about 3 parts by weight based on 100 parts by weight of the negative electrode active material.

The conductive material is included to provide electrode conductivity and any electrically conductive material may be used as a conductive material unless it causes a chemical change. Examples of the conductive material include a carbon-based material such as natural graphite, artificial graphite, carbon black, acetylene black, ketjen black, a carbon fiber, and the like; a metal-based material including a metal powder or a metal fiber of copper, nickel, aluminium, silver, or the like; a conductive polymer such as a polyphenylene derivative; or a mixture thereof.

The negative electrode current collector may be selected from a copper foil, a nickel foil, a stainless steel foil, a titanium foil, a nickel foam, a copper foam, a polymer substrate coated with a conductive metal, and a combination thereof.

The rechargeable lithium battery may further include a separator between the negative electrode and the positive electrode, depending on a type of the battery. Such a separator may for example include polyethylene, polypropylene, polyvinylidene fluoride, and multi-layers thereof such as a polyethylene/polypropylene double-layered separator, a polyethylene/polypropylene/polyethylene triple-layered separator, and a polypropylene/polyethylene/polypropylene triple-layered separator.

The rechargeable lithium battery may have a charging upper limit voltage of greater than or equal to about 4.35 V. For example, the charging upper limit voltage may be about 4.35 V to about 4.55 V.

Hereinafter, examples of the present invention and comparative examples are described. These examples, however, are not in any sense to be interpreted as limiting the scope of the invention.

## Manufacture of Rechargeable Lithium Battery Cells

### Example 1

$LiNi_{0.75}Mn_{0.23}Al_{0.02}O_2$ as a positive electrode active material, polyvinylidene fluoride as a binder, and acetylene black as a conductive material were mixed in a weight ratio of 96:3:1 and then, dispersed in N-methyl pyrrolidone, preparing positive electrode active material slurry.

The positive electrode active material slurry was coated on a 15 μm-thick Al foil and then, dried at 100 °C and pressed, manufacturing a positive electrode.

Negative electrode active material slurry was also prepared by using a mixture of artificial graphite and Si composite in a weight ratio of 93:7 as a negative electrode active material and then, mixing the negative electrode active material, a styrene-butadiene rubber binder, and carboxylmethyl cellulose in a weight ratio of 98:1:1 and dispersing the obtained mixture in distilled water.

As for the Si composite, a core including artificial graphite and silicon particles was coated with coal-based pitch on the surface.

The negative electrode active material slurry was coated on a 10 μm - thick Cu foil, dried at 100 °C, and pressed, manufacturing a negative electrode.

The manufactured positive and negative electrodes were assembled with a 10 μm-thick polyethylene separator to manufacture an electrode assembly, and an electrolyte solution was injected thereinto, manufacturing a rechargeable

lithium battery cell.

The electrolyte solution had a composition as follows.

(Composition of Electrolyte Solution)

Lithium salt: 1.5 M $LiPF_6$
Non-aqueous organic solvent: ethylmethyl carbonate : dimethyl carbonate (EMC:DMC = a volume ratio of 20:80)
Additive: 10 parts by weight of fluoroethylene carbonate (FEC) /0.5 parts by weight of succinonitrile (SN)
(However, in the composition of the electrolyte solution, "parts by weight" means the relative weight of the additive based on 100 parts by weight of the total electrolyte solution (lithium salt + non-aqueous organic solvent) except the additive.)

## Comparative Example 1

A rechargeable lithium battery cell was manufactured in the same manner as in Example 1, except that 5 wt% of ethylene carbonate was added based on the total weight of the non-aqueous organic solvent in the electrolyte solution composition.

## Comparative Examples 2 and 3

Rechargeable lithium battery cells were manufactured in the same manner as in Comparative Example 1, except that the ethylene carbonate was respectively added in each amount of 10 wt% and 20 wt%.

## Comparative Examples 4 to 7

Rechargeable lithium battery cells were manufactured respectively in the same manner as in Example 1 and Comparative Examples 1 to 3, except that the positive electrode active material was changed into $LiCoO_2$.

## Comparative Examples 8 to 11

Rechargeable lithium battery cells were manufactured respectively in the same manner as in Example 1 and Comparative Examples 1 to 3, except that the positive electrode active material was changed into $LiNi_{0.5}Co_{0.2}Al_{0.3}O_2$.

## Comparative Examples 12 to 15

Rechargeable lithium battery cells were manufactured respectively in the same manner as in Example 1 and Comparative Examples 1 to 3, except that the positive electrode active material was changed into $LiNi_{0.8}Co_{0.1}Mn_{0.1}O_2$.

## Examples 2 to 4

Rechargeable lithium battery cells were manufactured respectively in the same manner as in Example 1, except that the mixing ratio of ethylmethyl carbonate and dimethyl carbonate was changed into each volume ratio of 30: 70 (Example 2), 40 : 60 (Example 3), and 70 : 30 (Example 4).

### Evaluation 1: Evaluation of High-temperature Storage Characteristics

The rechargeable lithium battery cells according to Examples 1 to 4 and Comparative Examples 1 to 15 were measured with respect to initial direct current internal resistance (DC-IR) as $\triangle V/\triangle I$ (change in voltage / change in current), and after changing a maximum energy state inside the rechargeable lithium battery cells into a full charge state (SOC 100%) and storing the rechargeable lithium cells in this state at a high temperature (60 °C) for 30 days, the rechargeable lithium cells were measured with respect to direct current internal resistance to calculate a DC-IR increase rate (%) according to Equation 1, and the results are shown in Table 1, Table 2, and Table 5.

[Equation 1]

$$\text{DC-IR increase rate} = \{(\text{DC-IR after 30 days}) / (\text{initial DC-IR})\} \times 100\%$$

**Evaluation 2: Evaluation of High-temperature Cycle-life Characteristics**

The rechargeable lithium battery cells of Example 1 and Comparative Examples 1 to 3 were once charged and discharged at 0.2 C and then, measured with respect to charge and discharge capacity.

In addition, the rechargeable lithium battery cells according to Example 1 and Comparative Examples 1 to 3 were charged to a charge upper limit voltage (4.25 V to 4.45 V) and discharged to 2.5 V at 0.2 C under a constant current condition and then, measured with respect to initial discharge capacity at each charge voltage.

While 200 cycles charged and discharged under conditions of 0.33 C charge (CC/CV, 4.25 V to 4.45 V, 0.025 C cut-off) / 1.0 C discharge (CC, 2.5V cut-off) at 45 °C, the rechargeable lithium cells were measured with respect to discharge capacity. A ratio of the discharge capacity to the initial discharge capacity was shown as a capacity recovery rate (45 °C, 200 cycle, %, recovery) in Table 4.

**Evaluation 3: Measurement of Gas Generation after High-temperature Storage**

The rechargeable lithium battery cells according to Example 1 and Comparative Examples 1 to 3 were allowed to stand at 60 °C for 7 days and then, measured with respect to each gas generation amount (ml) on the 1st and 7th days by using Refinery Gas Analysis (RGA), and the increase rate of the gas generation amount on 7th day with respect to that on 1st day is calculated, and the results are shown in Table 3.

(Table 1)

| | Initial DCIR (mΩ) | DC-IR after storage at high temperature (60 °C) for 30 days (mΩ) | DC-IR Increase rate (60 °C, 30 days) (%) |
|---|---|---|---|
| Example 1 | 42.19 | 44.80 | 106.2 |
| Comparative Example 1 | 42.34 | 47.0 | 111.0 |
| Comparative Example 2 | 42.35 | 49.97 | 118.0 |
| Comparative Example 3 | 42.29 | 51.59 | 122.0 |

(Table 2)

| Positive electrode active material | | Initial DC-IR (mΩ) | DC-IR after storage at high temperature (60 °C) for 30 days (mΩ) | DC-IR Increase rate (60 °C, 30 days) (%) |
|---|---|---|---|---|
| $LiNi_{0.75}Mn_{0.23}Al_{0.02}O_2$ | Example 1 | 42.19 | 44.80 | 106.2 |
| | Comparative Example 1 | 42.34 | 47.00 | 111.0 |
| | Comparative Example 2 | 42.35 | 49.97 | 118.0 |
| | Comparative Example 3 | 42.29 | 51.59 | 122.0 |

(continued)

| Positive electrode active material | | Initial DC-IR (mΩ) | DC-IR after storage at high temperature (60 °C) for 30 days (mΩ) | DC-IR Increase rate (60 °C, 30 days) (%) |
|---|---|---|---|---|
| $LiCoO_2$ | Comparative Example 4 | 42.05 | 52.26 | 124.0 |
| | Comparative Example 5 | 42.25 | 52.49 | 124.0 |
| | Comparative Example 6 | 42.31 | 52.23 | 123.0 |
| | Comparative Example 7 | 42.45 | 52.38 | 123.0 |
| $LiNi_{0.5}Co_{0.2}$ $Al_{0.3}O_2$ | Comparative Example 8 | 42.05 | 51.26 | 122.0 |
| | Comparative Example 9 | 42.15 | 49.49 | 117.0 |
| | Comparative Example 10 | 42.21 | 49.23 | 117.0 |
| | Comparative Example 11 | 42.35 | 48.38 | 114.0 |
| $LiNi_{0.8}Co_{0.1}$ $Mn_{0.1}O_2$ | Comparative Example 12 | 42.34 | 52.26 | 123 |
| | Comparative Example 13 | 42.26 | 49.59 | 117 |
| | Comparative Example 14 | 42.2 | 49.33 | 117 |
| | Comparative Example 15 | 42.19 | 48.59 | 115 |

(Table 3)

| | Amount of gas generated after storage at high temperature (60 °C) | | |
|---|---|---|---|
| | 1 day (mL) | 7 days (mL) | Increase rate (%) |
| Example 1 | 0.022 | 0.032 | 145 |
| Comparative Example 1 | 0.023 | 0.063 | 274 |
| Comparative Example 2 | 0.025 | 0.068 | 272 |
| Comparative Example 3 | 0.031 | 0.089 | 287 |

(Table 4)

| Charge voltage (V) | | Capacity recovery rate (45 °C, 200 cycle, %) | Increase rate compared to Comparative Example 3 (%) |
|---|---|---|---|
| 4.45 | Example 1 | 94.5 | 19.2 |
| | Comparative Example 1 | 81.2 | - |
| | Comparative Example 2 | 79.8 | - |
| | Comparative Example 3 | 75.3 | - |
| 4.35 | Example 1 | 95.5 | 13.2 |
| | Comparative Example 1 | 86.2 | - |
| | Comparative Example 2 | 85.8 | - |
| | Comparative Example 3 | 82.3 | - |
| 4.25 | Example 1 | 94.2 | 0.4 |
| | Comparative Example 1 | 94.1 | - |
| | Comparative Example 2 | 93.5 | - |
| | Comparative Example 3 | 93.8 | - |

(Table 5)

| | Initial DC-IR (mΩ) | DC-IR after storage at high temperature (60 °C) for 30 days (mΩ) | DC-IR Increase rate (60 °C, 30 days) (%) |
|---|---|---|---|
| Comparative Example 1 | 42.34 | 47.0 | 111.0 |
| Example 1 | 42.19 | 44.8 | 106.2 |
| Example 2 | 42.22 | 48.5 | 114.9 |
| Example 3 | 42.31 | 49.2 | 116.3 |
| Example 4 | 42.51 | 49.8 | 117.1 |

Referring to Tables 1 to 5, the compositions of the present invention in which the lithium salt, the non-aqueous organic solvent, and the Co-free positive electrode active material were combined, exhibited a decrease in the DC-IR increase rate and thus all improved high-temperature storage characteristics and high temperature charge and discharge characteristics.

Particularly, referring to Table 2, the decrease in the DC-IR increase rate due to the addition of less than 5 wt% of EC was much more significantly observed in the positive electrode active material including cobalt-free lithium nickel manganese-based oxide.

In addition, the rechargeable lithium battery cells according to the examples exhibited a significantly reduced gas generation amount after the high-temperature storage.

While this invention has been described in connection with what is presently considered to be practical example embodiments, it is to be understood that the invention is not limited to the disclosed embodiments, but, on the contrary, is intended to cover various modifications and equivalent arrangements included within the scope of the appended claims.

**<Description of Symbols>**

100: rechargeable lithium battery
112: negative electrode
113: separator
114: positive electrode
120: battery case
140: sealing member

## Claims

1. A rechargeable lithium battery, comprising

an electrolyte solution including a non-aqueous organic solvent and a lithium salt;
a positive electrode including a positive electrode active material; and
a negative electrode including a negative electrode active material; and
wherein the non-aqueous organic solvent contains less than about 5 wt% of ethylene carbonate based on the total weight of the non-aqueous organic solvent, and
the positive electrode active material includes a cobalt-free lithium nickel manganese-based oxide.

2. The rechargeable lithium battery of claim 1, wherein
the non-aqueous organic solvent is composed of chain carbonate alone.

3. The rechargeable lithium battery of claim 2, wherein

the chain carbonate is represented by Chemical Formula 1:

[Chemical Formula 1]

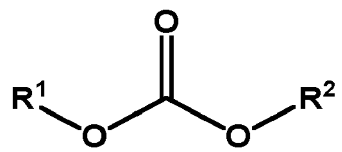

wherein, in Chemical Formula 1
$R^1$ and $R^2$ are each independently a substituted or unsubstituted C1 to C20 alkyl group.

4. The rechargeable lithium battery of any one of claims 1 to 3, wherein
the non-aqueous organic solvent is a mixture of two or more solvents selected from dimethyl carbonate (DMC), diethyl carbonate (DEC), dipropyl carbonate (DPC), methylpropyl carbonate (MPC), ethylpropyl carbonate (EPC), and ethylmethyl carbonate (EMC).

5. The rechargeable lithium battery of any one of claims 1 to 4, wherein
the non-aqueous organic solvent includes ethylmethyl carbonate (EMC) and dimethyl carbonate (DMC) in a volume ratio of about 10:90 to about 50:50.

6. The rechargeable lithium battery of any one of claims 1 to 5, wherein
the electrolyte solution further includes one or more additives selected from vinylene carbonate (VC), fluoroethylene carbonate (FEC), difluoroethylene carbonate, chloroethylene carbonate, dichloroethylene carbonate, bromoethylene carbonate, dibromoethylene carbonate, nitroethylene carbonate, cyanoethylene carbonate, vinylethylene carbonate (VEC), adiponitrile (AN), succinonitrile (SN), 1,3,6-hexane tricyanide (HTCN), propene sultone (PST), propane sultone (PS), lithium tetrafluoroborate ($LiBF_4$), lithium difluorophosphate ($LiPO_2F_2$), and 2-fluorobiphenyl (2-FBP).

7. The rechargeable lithium battery of any one of claims 1 to 6, wherein

the cobalt-free lithium nickel manganese-based oxide includes a lithium composite oxide represented by Chemical Formula 3:

[Chemical Formula 3] $Li_aNi_xMn_yM^1{}_xM^2{}_wO_{2\pm b}X_c$

wherein, in Chemical Formula 3,

$$0.5 \leq a < 1.8, 0 \leq b \leq 0.1, 0 \leq c \leq 0.1, 0 \leq w < 0.1, 0.6 \leq x < 1.0,$$

$$0 < y < 0.4, 0 < z < 0.1, w + x + y + z = 1,$$

$M^1$ and $M^2$ are each independently one or more element selected from Al, Mg, Ti, Zr, Cr, Sr, V, B, W, Mo, Si, Ba, Ca, Ce, Fe, and Nb, and X is one or more element selected from S, F, P, and Cl.

8. The rechargeable lithium battery of claim 7, wherein

The lithium composite oxide represented by Chemical Formula 3 is represented by Chemical Formula 3-1:

[Chemical Formula 3-1] $Li_aN_{ix1}Mn_{y1}Al_{z1}M^2{}_{w1}O_{2\pm b}X_c$

wherein, in Chemical Formula 3-1,

$$0.5 \leq a < 1.8, 0 \leq b \leq 0.1, 0 \leq c \leq 0.1, 0 \leq w1 < 0.1, 0.6 \leq x1 <$$

$$1.0, 0 < y1 < 0.4, 0 < z1 < 0.1, w1 + x1 + y1 + z1 = 1,$$

$M^2$ is one or more element selected from Mg, Ti, Zr, Cr, Sr, V, B, W, Mo, Si, Ba, Ca, Ce, Fe, and Nb, and X is one or more element selected from S, F, P, and Cl.

9. The rechargeable lithium battery of claim 8, wherein in Chemical Formula 3-1, x1 is $0.6 \leq x1 \leq 0.79$, y1 is $0.2 \leq y1 \leq 0.39$, and z1 is $0.01 \leq z1 < 0.1$.

10. The rechargeable lithium battery of any one of claims 1 to 9, wherein the negative electrode active material includes graphite, a Si composite or a mixture thereof.

11. The rechargeable lithium battery of any one of claims 1 to 10, wherein the rechargeable lithium battery has a charging upper limit voltage of greater than or equal to about 4.35 V.

【FIG. 1】

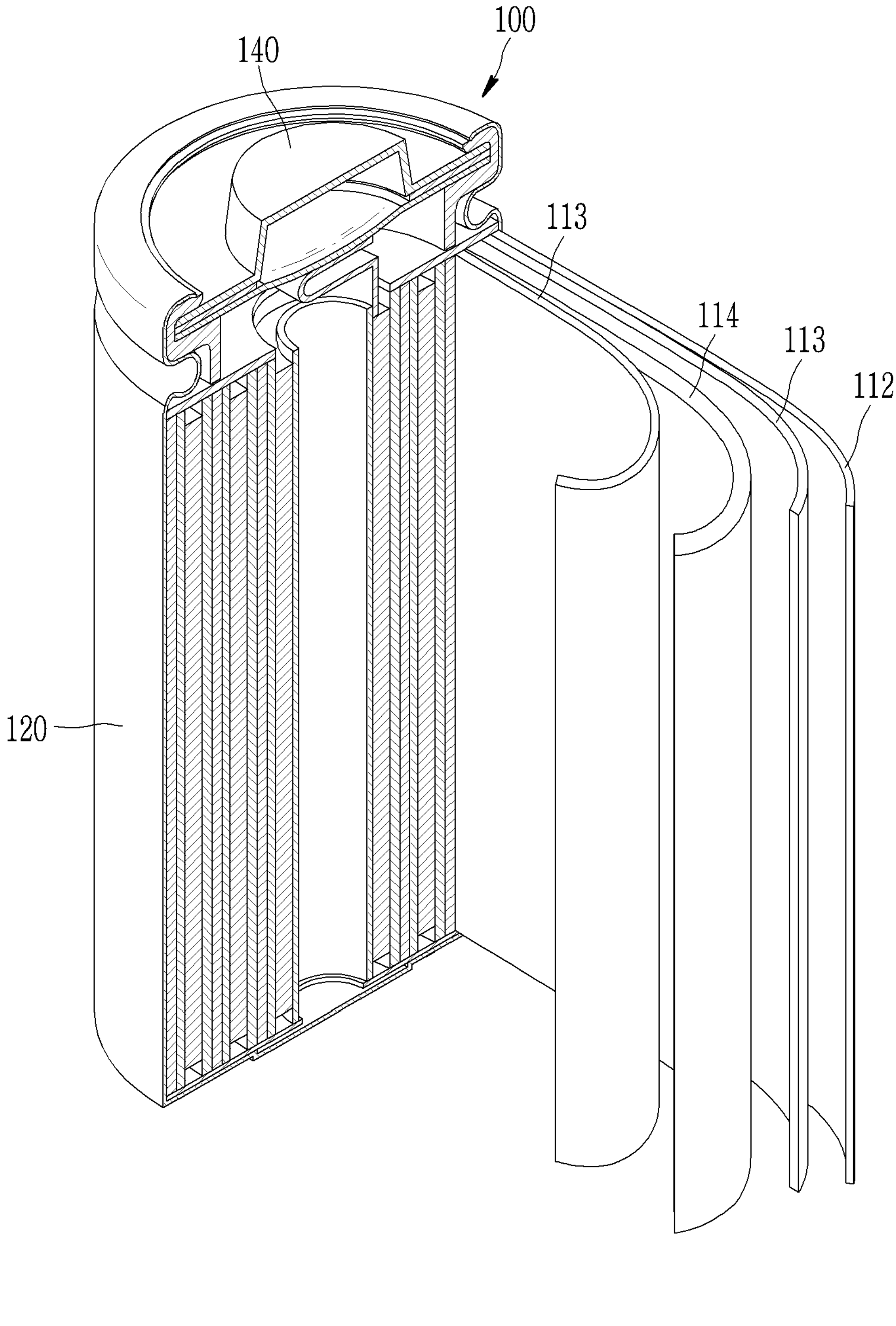

Europäisches Patentamt
European Patent Office
Office européen des brevets

# EUROPEAN SEARCH REPORT

Application Number
EP 23 19 5620

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 110 010 886 A (SHANGHAI CENAT NEW ENERGY CO LTD ET AL.) 12 July 2019 (2019-07-12) | 1,11 | INV. H01M4/485 H01M10/0525 H01M10/0569 H01M4/38 H01M4/583 |
| Y | * par. 86-97 * | 2-8,10 | |
| Y | EP 3 975 295 A1 (SVOLT ENERGY TECH CO LTD [CN]) 30 March 2022 (2022-03-30) * par. 41, 46 * | 7,8 | |
| Y | JP 2009 163971 A (PANASONIC CORP) 23 July 2009 (2009-07-23) * page 6, table 1; par. 22, 26, 37, 40 * | 2-6,10 | |
| L | EP 4 261 975 A1 (SAMSUNG SDI CO LTD [KR]) 18 October 2023 (2023-10-18) * Par. 56, 122, 124, 126, 136 * | 1-11 | |

TECHNICAL FIELDS SEARCHED (IPC)

H01M

The present search report has been drawn up for all claims

| Place of search | Date of completion of the search | Examiner |
|---|---|---|
| Munich | 8 February 2024 | Bettio, Andrea |

3

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO.

EP 23 19 5620

This annex lists the patent family members relating to the patent documents cited in the above-mentioned European search report.
The members are as contained in the European Patent Office EDP file on
The European Patent Office is in no way liable for these particulars which are merely given for the purpose of information.

08-02-2024

| Patent document cited in search report | | Publication date | Patent family member(s) | | Publication date |
|---|---|---|---|---|---|
| CN 110010886 | A | 12-07-2019 | NONE | | |
| EP 3975295 | A1 | 30-03-2022 | CN 111430683 | A | 17-07-2020 |
| | | | EP 3975295 | A1 | 30-03-2022 |
| | | | JP 2023506527 | A | 16-02-2023 |
| | | | KR 20220104785 | A | 26-07-2022 |
| | | | US 2022393166 | A1 | 08-12-2022 |
| | | | WO 2021143376 | A1 | 22-07-2021 |
| JP 2009163971 | A | 23-07-2009 | NONE | | |
| EP 4261975 | A1 | 18-10-2023 | CN 116914229 | A | 20-10-2023 |
| | | | EP 4261975 | A1 | 18-10-2023 |
| | | | KR 20230146375 | A | 19-10-2023 |
| | | | US 2023327198 | A1 | 12-10-2023 |

EPO FORM P0459

For more details about this annex : see Official Journal of the European Patent Office, No. 12/82